Europäisches Patentamt

European Patent Office

Office européen des brevets

(19)

(11) Numéro de publication : **0 516 558 A1**

## (12) DEMANDE DE BREVET EUROPEEN

(21) Numéro de dépôt : **92420151.0**

(51) Int. Cl.$^5$ : **C22B 26/20, C01B 21/072**

(22) Date de dépôt : **11.05.92**

(30) Priorité : **17.05.91 FR 9106613**

(43) Date de publication de la demande :
**02.12.92 Bulletin 92/49**

(84) Etats contractants désignés :
**DE IT**

(71) Demandeur : **PECHINEY
ELECTROMETALLURGIE
Tour Manhattan, 5/6 Place de l'Iris
F-92400 Courbevoie (FR)**

(72) Inventeur : **Paret, Alain
F-05310 La Roche de Rame (FR)**
Inventeur : **Peyron, François
10, rue Victorien Sardou
F-75016 Paris (FR)**

(74) Mandataire : **Jacquet, Michel et al
PECHINEY 28, rue de Bonnel
F-69433 Lyon Cédex 03 (FR)**

(54) **Procédé de raffinage du calcium par voie nitrure.**

(57)    Procédé de raffinage de calcium contenant de l'aluminium comme impureté sous forme de $CaAl_2$ caractérisé en ce qu'on nitrure le calcium pour former $Ca_3N_2$, et en ce qu'on fait réagir $Ca_3N_2$ avec $CaAl_2$ initialement présent et avec de l'aluminium en grains de manière à former du calcium isolable sous forme de calcium à haute pureté contenant moins de 0,1 % en poids d'aluminium et à former du nitrure d'aluminium.

EP 0 516 558 A1

## DOMAINE DE L'INVENTION

L'invention concerne un procédé de raffinage du calcium permettant d'obtenir un calcium de pureté élevée, en particulier à basse teneur en aluminium.

## ETAT DE LA TECHNIQUE

On sait que la fabrication du calcium se fait essentiellement par aluminothermie de la chaux vers 1400°C en phase solide selon la réaction :

$$5\ CaO + 2\ Al \dashrightarrow Al_2O_3,\ 2\ CaO + 3\ Ca$$

La réaction est conduite dans un four sous vide. Le calcium est séparé à l'état de vapeur puis condensé en solide. Cependant, il y a entraînement de vapeur d'aluminium de sorte que ce procédé conduit à un calcium contenant une quantité non négligeable d'aluminium, de l'ordre de un à quelques pour cent sous forme de $CaAl_2$.

On connaît aussi la fabrication de calcium par électrolyse d'un sel de calcium. Ce procédé conduit à un calcium à faible teneur en impuretés, notamment en aluminium, mais il n'est pas économiquement rentable comparé au procédé précédent.

Enfin, il a aussi été proposé de fabriquer le calcium par la réaction suivante :

$$CaSi + Fe \dashrightarrow FeSi + Ca$$

Cette réaction, qui peut être réalisée en phase solide avec des produits divisés ou en phase liquide après fusion des produits de départ, conduit certes à un calcium de pureté satisfaisante mais n'est pas non plus compétitive sur le plan économique par rapport au premier procédé cité, par aluminothermie de la chaux.

## POSITION DU PROBLEME

Si, pour certains usages, par exemple pour la désoxydation de l'acier, on peut utiliser un calcium contenant de petites quantités d'aluminium, par exemple 1 à 3% (% en poids), par contre il est des applications qui exigent un calcium de grande pureté, en particulier avec une teneur faible en aluminium, typiquement inférieure en poids à 0,1 %.

Parmi ces applications, on peut citer la fabrication de certains métaux par calciothermie, par exemple la fabrication de l'uranium par calciothermie de $UO_2$.

On peut citer aussi l'utilisation du calcium pour la fabrication de certains alliages, par exemple les alliages de plomb servant à fabriquer des batteries.

Pour toutes ces applications, l'emploi d'un calcium à moins de 0,1 % d'aluminium est indispensable.

Certes, il est techniquement possible d'obtenir un calcium à moins de 0,1 % d'aluminium en distillant un calcium obtenu par aluminothermie de la chaux, mais un tel procédé n'est pas viable économiquement car une telle distillation augmente beaucoup le prix de revient, en tout cas bien au-delà de ce que le marché est prêt à payer pour un calcium de plus grande pureté.

La demanderesse a donc recherché un procédé pour obtenir, à un prix compétitif, un calcium à moins de 0,1 % d'aluminium de manière à pouvoir satisfaire l'ensemble de ses applications.

## DESCRIPTION DE L'INVENTION

Selon l'invention, le procédé de raffinage dans un four d'un calcium contenant plus de 0, 1 % en poids d'aluminium, sous forme de $CaAl_2$, est caractérisé en ce qu'on nitrure le calcium introduit dans le four pour former $Ca_3N_2$ et en ce qu'on fait réagir $Ca_3N_2$ avec $CaAl_2$ initialement présent dans le calcium à raffiner et avec de l'aluminium en grains de manière à former du calcium isolable sous forme de calcium à haute pureté contenant moins de 0,1 % en poids de Al et à former un nitrure d'aluminium (AlN) qui constitue une matière première de valeur.

L'idée à la base de la présente invention consiste à réaliser simultanément deux opérations :
- une purification du calcium
- la fabrication d'AlN, qui est une matière première de valeur pour la fabrication de réfractaires.

Ainsi, la demanderesse, au lieu de se focaliser sur l'élimination directe de l'aluminium qui aurait été coûteuse comme déjà mentionné, a été amenée au contraire à en introduire dans le procédé selon l'invention, ce qui permet de réaliser simultanément deux opérations qui se rentabilisent mutuellement.

Cependant, pour mettre en application une telle idée, il a fallu résoudre un certain nombre de problèmes afin d'avoir des réactions complètes et sélectives et d'obtenir des produits de réaction (Ca et AlN) à la fois facilement isolables et avec la pureté souhaitée.

Ces réactions, qui ont lieu avec au moins une phase solide, sont les suivantes :
Réaction de formation du nitrure de calcium :

$$(1) \qquad 3\,Ca + N_2 \relbar\joinrel\relbar\joinrel\relbar\joinrel\relbar\joinrel\rightarrow Ca_3N_2$$

Réactions du nitrure de calcium avec l'aluminium et avec $CaAl_2$ (impureté du Ca de départ) :

$$(2) \qquad Ca_3N_2 + 2\,Al \relbar\joinrel\relbar\joinrel\relbar\joinrel\relbar\joinrel\rightarrow 2\,AlN + 3\,Ca$$

$$(3) \qquad Ca_3N_2 + CaAl_2 \relbar\joinrel\relbar\joinrel\relbar\joinrel\relbar\joinrel\rightarrow 2\,AlN + 4\,Ca$$

La demanderesse a trouvé qu'il était avantageux d'introduire l'aluminium au début du procédé et de réaliser initialement un mélange à répartition homogène de deux solides granuleux, le Ca à raffiner et l'Al, sous peine d'avoir un milieu réactionnel trop hétérogène et des réactions chimiques incomplètes.

Comme agent de nitruration, la demanderesse a choisi l'azote et la réaction de nitruration a été conduite à une température comprise entre 200 et 350°C et de préférence entre 220 et 300°C.

Un problème essentiel que la demanderesse a dû résoudre a été la maîtrise de la réaction des 4 espèces chimiques (Ca, Al, $N_2$, $CaAl_2$) présentes lors de la nitruration du calcium.

En effet, on peut avoir simultanément les deux réactions suivantes :

$$(1) \qquad 3\,Ca + N_2 \relbar\joinrel\relbar\joinrel\relbar\joinrel\relbar\joinrel\rightarrow Ca_3N_2$$

$$(4) \qquad Ca + 2\,Al \relbar\joinrel\relbar\joinrel\relbar\joinrel\relbar\joinrel\rightarrow CaAl_2$$

Selon l'invention, il importe que seule la réaction (1) ait lieu car la formation de $Ca_3N_2$ permet seule d'obtenir l'Aln final.

Certes, le procédé selon l'invention pourrait accepter qu'une petite quantité d'Al réagisse avec du Ca selon la réaction (4), mais la présence de réactions concurrentes signifie une mauvaise maîtrise de la stoechiométrie des réactifs et a pour conséquence généralement la présence de constituants indésirables en fin de réaction. Or, il est essentiel pour le procédé d'avoir une stoechiométrie rigoureuse pour n'obtenir en fin de réaction que Ca et AlN, sans présence gênante de Al, $Ca_3N_2$ ou $CaAl_2$.

Selon l'invention, on évite la réaction (4) de l'aluminium avec le calcium lors de la nitruration de ce dernier, en utilisant de l'aluminium en grains de taille particulaire moyenne supérieure à 1 mm et en nitrurant le calcium à une température inférieure à 350°C. En effet, la demanderesse a observé que la réaction "parasite" (4) se produisait d'autant plus facilement que l'aluminium était sous forme plus fine et divisée, et dans ce cas, cette réaction (4) avait lieu à une température supérieure 350°C.

Par ailleurs, la poudre d'aluminium ne doit pas être trop grossière pour limiter l'hétérogénéité du milieu réactionnel. Ainsi, une taille particulaire moyenne comprise entre 1 et 5 mm est nécessaire, et de préférence, une taille particulaire moyenne comprise entre 2 et 3 mm.

De préférence, on met en oeuvre l'invention en procédant de la manière suivante :

a) après avoir déterminé par dosage la teneur en Al du Ca à purifier, on mélange le calcium à raffiner en grains contenant n moles de calcium et m moles de $CaAl_2$ avec au plus (n - 3m). 2/3 moles d'aluminium en grains de taille particulaire moyenne comprise entre 2 et 3 mm.

b) on comprime ledit mélange de poudres de manière à former des pastilles.

c) après avoir placé ces pastilles dans un four, généralement à l'aide d'un panier, on forme du $Ca_3N_2$ par nitruration du calcium de ces pastilles en les maintenant sous une pression d'azote et à une température comprise entre 220 et 300°C en régulant le débit d'azote , ce qui permet de contrôler la température.

d) on met le four sous vide et on le porte à un température comprise entre 700 et 1200°C de manière à former AIN et Ca, par la réaction de $Ca_3N_2$ avec le $CaAl_2$ présent initialement et avec l'aluminium introduit initialement et à recueillir par distillation du calcium (n+m moles) purifié à moins de 0,1 % de Al et, dans le four, l'AIN (2n/3 moles) valorisables comme matière première pour refractaires.

Il y a intérêt à ajuster avec précision la quantité d'Al à introduire en fonction de la composition du Ca à purifier : pour n moles de calcium contenant m moles de $CaAl_2$, il faut introduire un nombre de moles de Al égal à 2/3 . (n - 3m).

Si l'aluminium était en excès, il serait gênant lors de la distillation du Ca et pourrait venir le repolluer.

Il est important selon l'invention de comprimer suffisamment les grains de Ca à purifier et ceux de Al de manière à ce que les pastilles présentent une tenue mécanique suffisante tout au long du procédé et restent en fait à l'état solide aggloméré en dépit des variation de nature chimique de la phase solide tout au long du procédé (Ca ---> $Ca_3N_2$ ---> AlN).

Mais, par ailleurs, il importe que l'azote puisse diffuser facilement à l'intérieur des pastilles pour nitrurer le calcium, et aussi que le calcium formé à haute température puisse être séparé, par distillation, de l'AIN. Pour toutes ces raisons, il ne faudrait pas que les pastilles soient trop fortement agglomérées. En pratique, il suffit que les pastilles présentent une porosité ouverte comprise entre 5 et 15 % du volume de la pastille, ce qui peut être obtenu généralement avec des pressions comprises typiquement entre 0,5 et 2 tonne / $cm^2$ (soit environ 50 MPa et 200 MPa).

L'invention permet de purifier du calcium même très chargé en aluminium. Cependant il ne faut pas que le rapport molaire Ca/Al du calcium à purifier soit inférieur à 2. En effet, pour cette valeur limite, le mélange à purifier est composé de 3 Ca + CaAl$_2$, qui conduit après nitruration à Ca$_3$N$_2$ + CaAl$_2$, un tel mélange conduisant par réaction (3) complète à 2 AlN + 4 Ca, sans introduction complémentaire d'aluminium en grains.

Selon l'invention, on forme Ca et AlN par les réactions (2) et (3) au-dessus de la température de fusion du calcium et sous vide, de manière à pouvoir distiller en continu le calcium formé et à avoir essentiellement une phase solide dans le four, sous forme de pastilles solides poreuses, qui, en fin d'opération, sont des pastilles d'AlN faciles à sortir du four et à manipuler.

Ces pastilles d'AlN peuvent encore contenir de faibles quantités de calcium, ce qui est peu gênant pour l'utilisation ultérieure de l'AlN. Cependant, la teneur résiduelle en Ca diminue fortement lorsqu'on monte la température à laquelle ont lieu les réactions (2) et (3) de formation du calcium, comme illustré aux exemples 1 et 2.

On peut selon l'invention contrôler la nitruration par la régulation de la pression et de la quantité d'azote consommée dans le four. Ainsi, il est possible de nitrurer une quantité, une fraction prédéterminée du calcium à purifier.

Cette possibilité est mise à profit en particulier pour réaliser une modalité de l'invention, intéressante surtout lorsque le calcium de départ est riche en CaAl$_2$. Selon cette modalité, le procédé selon l'invention est utilisé, sans introduire d'aluminium, pour seulement purifier le calcium et transformer le CaAl$_2$ en Ca et AlN.

Pour cela, on forme, par nitruration contrôlée et limitée du Ca, autant de moles de Ca$_3$N$_2$ qu'il y a de moles de CaAl$_2$ dans le calcium à purifier, afin que seule la réaction (3) ait lieu.

Bien sûr, si la teneur initiale du calcium en CaAl$_2$ est faible, typiquement de l'ordre 1 à 3 %, il est possible selon l'invention de mettre en oeuvre cette modalité, mais dans ce cas, elle perd de son intérêt économique.

Le procédé selon l'invention peut aussi être mis en oeuvre pour la purification d'autres métaux du groupe II de la classification périodique des éléments.

Ainsi, en vue de récupérer le magnésium contenu dans des fines de magnésium partiellement oxydées, on procède, comme pour la purification du calcium, par les étapes suivantes :
- formation de pastilles d'un mélange de fines de magnésium et de grenaille d'aluminium (taille des particules de grenaille supérieure à 1,2 mm dans ce cas),
- nitruration sélective du magnésium vers 200°C pour former Mg$_3$N$_2$ (on évite la réaction de l'aluminium et du magnésium : 12 Al + 17 Mg ---> Al$_{12}$Mg$_{17}$)
- Réaction à 900°C de Mg$_3$N$_2$ avec Al pour former Mg récupéré par distillation et AlN.

Le résidu de l'opération, constitué principalement d'AlN et d'impuretés, essentiellement MgO et Mg$_3$N$_2$, peut être transformé, après addition d'alumine et introduction du mélange dans de la magnésie électrofondue, en une solution solide d'AlN dans MgO (oxynitrure double de magnésium et d'aluminium) qui constitue une matière de valeur.

EXEMPLES

Exemple 1

On a broyé 82 kg de calcium impur titrant 2,4 % en poids d'Al de manière à obtenir des grains de taille particulaire inférieure à 5 mm. La fraction de taille particulaire inférieure à 2 mm représente 4 % en poids du lot broyé.

On a mélangé ce calcium en grains avec 20 kg d'aluminium sous forme de grains de 2 mm environ.

On a pressé ce mélange de grains soigneusement homogénéisé en pastilles de 50 g environ, pastilles cylindriques de 4 cm de diamètre et de 15 mm d'épaisseur, obtenus par compression à froid du mélange de grains, en exerçant une pression de l'ordre de 1 tonne/ cm$^2$ (environ 100 MPa).

On a disposé ces pastilles dans un panier en fer que l'on a placé dans un four constitué d'une enveloppe étanche chauffée extérieurement.

Après avoir dégazé le four sous vide, on l'a mis sous pression d'azote (1 atmosphère), puis on a monté la température progressivement.

Une forte réaction exothermique a démarré vers 250°C. Pour éviter une trop forte montée de température qui aurait favorisé la formation de CaAl$_2$, le débit d'azote a été modulé de manière à contrôler la nitruration du calcium et à éviter que la température de la charge ne dépasse 350°C.

Après stabilisation et arrêt de la consommation d'azote, on a mis le four sous vide et on a progressivement monté la température jusqu'à 900°C.

On a recueilli la vapeur de Ca formé sur un condenseur refroidi à l'eau disposé en haut du four.

En fin d'opération, après refroidissement, on a ouvert le four et on récupéré sur le condenseur un lingot de 78 kg de calcium à moins de 0,06% en poids d'Al, et dans le panier 35 kg d'AlN contenant 5,7 % en poids de Ca.

Exemple 2

On a réalisé une opération identique à celle décrite à l'exemple 1, sauf qu'on a porté la charge à 1150°C, au lieu de 900°C à l'exemple 1, après nitruration du Ca de départ. La teneur en Ca résiduel de l'AlN récupéré est alors de 0,72% en poids.

Exemple 3 (hors du domaine de l'invention)

On a broyé 10 kg de Ca brut à 1,7% en poids d'Al en grains de taille particulaire inférieure à 5 mm. On a mélangé ces 10 kg de grains de Ca avec 1 kg d'Al sous forme de grains de taille particulaire comprise entre 0,5 et 1 mm.
On a pressé le mélange de grains en pastilles et on poursuivi le procédé comme à l'exemple 1.
Lors de la nitruration sous atmosphère d'azote, on a observé que la quantité d'azote consommé était très faible et qu'il a fallu porter la charge vers 400°C pour observer la première réaction exothermique.
A 900°C, il n'a pas été possible de distiller correctement la charge.
En fin d'opération, on a récupéré dans le four un alliage AlCa fondu et pratiquement aucun dépôt de Ca sur le condenseur.

Exemple 4

Cet exemple illustre, selon l'invention, la récupération de magnésium pur à partir de fines de magnésium à purifier.
On a mélangé 96 kg de fines de Mg de taille particulaire inférieure à 250 μm et titrant 92,5 % de Mg (soit 89 kg) et 7,5 % de MgO (soit 7 kg), avec 54 kg de grenaille d'Al en grains de 2 mm, puis on a pastillé ce mélange. Après avoir chargé ces pastilles dans un four, on a mis le four sous atmosphère d'azote et on a porté la température à 200°C. On a régulé le débit d'azote pour contrôler la température de la charge et ne pas dépasser 250°C. On a ainsi consommé 34 kg de $N_2$.
Après avoir mis le four sous vide, on a monté la température du four à 900°C et on a recueilli sur le condenseur le magnésium formé dans le four. On a suivi la distillation du magnésium par l'augmentation de température de l'eau du condenseur.
On a obtenu sur le condenseur un lingot de 73 kg de Mg titrant 99,92 % de Mg.
Dans le four, on a obtenu 111 kg de résidus titrant (% en poids) :
> 74 % d'AlN
> 20 % de $Mg_3N_2$
> 6 % de MgO

On a ajouté à ce résidu 22 kg d'alumine en poudre de manière à respecter la stoechiométrie de la réaction suivante :

$$Mg_3N_2 + Al_2O_3 \longrightarrow 2\,AlN + 3\,MgO$$

On a ainsi obtenu 133 kg d'un mélange que l'on a réduit en poudre et ajouté à 367 kg de magnésie électrofondue dans un four à arc.
Après coulée, on a ainsi obtenu 500 kg d'oxynitrure double de Mg et d'Al électrofondu contenant en poids l'équivalent de 80% de MgO et 20% d'AlN. Il s'agit d'un oxynitrure où les espèces AlN et MgO n'existent pas en tant que telles à l'état pur, mais sous forme d'une solution solide d'oxynitrures dont les propriétés diffèrent de celles de MgO et AlN.
Le bilan matière de l'essai s'établit ainsi :
- matières de départ :
* fines de Mg impur      : 96 kg
* azote      : 34 kg
* aluminium      : 54 kg
* alumine      : 22 kg
* magnésie      : 367 kg
- produits obtenus :
* magnésium pur      : 73 kg
* oxynitrure de Mg et Al      : 500 kg

## AVANTAGES DU PROCEDE

Comme déjà mentionné, le procédé selon l'invention présente un grand intérêt d'ordre économique puisqu'il permet d'obtenir simultanément deux produits de grande valeur économique, du calcium purifié à moins de 0,1 % d'Al et du nitrure d'aluminium dans le cas de la purification du calcium, ou du magnésium pur et un oxynitrure double de Mg et Al dans le cas de la récupération de fines de Mg.

Il faut mentionner aussi la facilité de mise en oeuvre de ce procédé qui utilise des équipements conventionnels, qui ne requiert que la manipulation de solides et qui en fait se passe entièrement sans que les phases liquides intermédiaires (Al et Ca fondus) apparaissent en tant que telles, comme si toutes les réactions avaient seulement lieu entre gaz et solide ou solide et solide.

Ceci est très intéressant en pratique puisqu'avec ce procédé, la charge à traiter est sous forme de pastilles solides disposées dans des paniers et qu'en conséquence, les manipulations et manutentions sont aisées et surtout, il ne peut y avoir de pollution du four avec tout ce que cela entraîne comme frais de nettoyage et de maintenance.

## Revendications

**1 -** Procédé de raffinage dans un four d'un calcium contenant plus de 0,1 % en poids d'aluminium, sous forme de $CaAl_2$, caractérisé en ce qu'on nitrure le calcium introduit dans un four pour former $Ca_3N_2$ et en ce qu'on fait réagir $Ca_3N_2$ avec $CaAl_2$ initialement présent dans le calcium à raffiner et avec de l'aluminium en grains de manière à former du calcium isolable sous forme de calcium à haute pureté contenant moins de 0,1 % en poids de Al et à former un nitrure d'aluminium (AlN) qui constitue une matière première de valeur.

**2 -** Procédé selon la revendication 1 dans lequel on introduit ledit aluminium en grains dans le four avant de nitrurer le calcium.

**3 -** Procédé selon la revendication 2 dans lequel on introduit dans le four un mélange, à répartition homogène, de grains de Ca et de Al comprimés sous forme de pastilles.

**4 -** Procédé selon une quelconque des revendications 1 à 3 dans lequel lesdits grains de Al ont une taille particulaire comprise entre 1 et 5 mm.

**5 -** Procédé selon la revendication 4 dans lequel lesdits grains de Al ont de préférence une taille particulaire comprise entre 2 et 3 mm.

**6 -** Procédé selon une quelconque des revendications 3 à 5 dans lequel les dites pastilles ont une porosité ouverte comprise entre 5 et 15 % du volume des pastilles.

**7 -** Procédé selon une quelconque des revendications 1 à 6 dans lequel on nitrure la calcium à l'aide d'azote à une température comprise entre 200 et 350°C.

**8 -** Procédé selon la revendication 7 dans lequel on contôle la température de la réaction de nitruration du calcium en régulant le débit d'azote.

**9 -** Procédé selon une quelconque des revendications 1 à 8 dans lequel on fait réagir le nitrure de calcium formé avec l'aluminium en grains introduit et avec $CaAl_2$ initialement présent dans le calcium, à une température comprise entre 700 et 1200°C, et on sépare par distillation le calcium formé.

**10 -** Procédé selon une quelconque des revendications 1 à 9 dans lequel le rapport molaire Ca/Al du calcium à purifier est égal au moins à 2.

**11 -** Procédé selon une quelconque des revendications 1 à 10 dans lequel, on nitrure un calcium à purifier contenant n moles de calcium et m moles de $CaAl_2$ de manière à former n/3 moles de $Ca_3N_2$ que l'on fera réagir avec m moles de $CaAl_2$ et (n-3m). 2/3 moles d'aluminium pour obtenir, les pertes mises à part, n+m moles de calcium purifié et 2n/3 moles d'AlN.

**12 -** Procédé de raffinage dans un four d'un calcium contenant plus de 0,1 % en poids d'aluminium, sous forme de $CaAl_2$, caractérisé en ce qu'on nitrure, avec de l'azote à une température comprise entre 200 et 350°C, une quantité limitée du calcium introduit dans le four pour former autant de moles de $Ca_3N_2$ qu'il y a de moles de $CaAl_2$ initialement présent dans le calcium à raffiner et en ce qu'on fait réagir, à une température comprise entre 700 et 1200°C, le $Ca_3N_2$ formé avec $CaAl_2$ initialement présent dans le calcium à raffiner de manière à former du calcium purifié isolable par distillation sous forme de calcium à haute pureté contenant moins de 0,1 % en poids de Al et du nitrure d'aluminium (AlN) qui constitue une matière première de valeur.

EP 0 516 558 A1

**Office européen des brevets** **RAPPORT DE RECHERCHE EUROPEENNE** Numero de la demande

EP 92 42 0151

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 765 831 (COCHRAN ET AL.) <br> * colonne 8, ligne 26 – ligne 43; revendications 7-10,16 * <br> --- | 1,2,9 | C22B26/20 <br> C01B21/072 |
| Y | GB-A-803 767 (FARBENFABRIKEN BAYER A. G.) <br> * revendications 1-7 * <br> --- | 1,2,9 | |
| A | US-A-4 769 067 (COCHRAN ET AL.) <br> --- | | |
| A | US-A-4 812 168 (COCHRAN ET AL.) <br> --- | | |
| A | US-A-4 582 532 (CHRISTINI ET AL.) <br> --- | | |
| A | GB-A-602 062 (DOMINION MAGNESIUM LTD) <br> --- | | |
| A | EP-A-0 371 771 (ALCAN INTERNATIONAL LTD) <br><br> ----- | | |

**DOMAINES TECHNIQUES RECHERCHES (Int. Cl.5)**

C22B
C01B

Le présent rapport a été établi pour toutes les revendications

| Lieu de la recherche | Date d'achèvement de la recherche | Examinateur |
|---|---|---|
| LA HAYE | 16 SEPTEMBRE 1992 | WITTBLAD U.A. |

EPO FORM 1503 01.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

7